# EUROPÄISCHE PATENTSCHRIFT

(11) **EP 2 743 127 B1**
(45) Veröffentlichungstag und Bekanntmachung des Hinweises auf die Patenterteilung: **20.07.2016**
(21) Anmeldenummer: 12196414.2
(22) Anmeldetag: 11.12.2012
(51) Int. Cl.: B60N 2/68, B60R 22/26

(54) **Fahrgastsitz**
Passenger seat
Siège de véhicule

(43) Veröffentlichungstag der Anmeldung: 18.06.2014
(73) Patentinhaber: Franz Kiel GmbH, 6720 Nördlingen (DE)
(72) Erfinder: Mill, Jürgen, 73479 Ellwangen (DE)
(74) Vertreter: Schmid, Wolfgang

(56) Entgegenhaltungen:
- WO-A1-2005/087551
- DE-A1-102010 049 201
- US-A1- 2011 089 744

## Beschreibung

Die Erfindung betrifft einen Fahrgastsitz, insbesondere für einen Reisebus, mit einer Sitzfläche, einer Rückenlehne und einem Sicherheitsgurtsystem nach der im Oberbegriff von Anspruch 1 näher definierten Art.

Gattungsgemäße Fahrgastsitze sind aus dem allgemeinen Stand der Technik bekannt. In jüngster Zeit werden für Fahrgastsitze in Reisebussen häufiger Dreipunkt-Sicherheitsgurtsysteme verwendet, da diese dem Fahrgast eine höhere Sicherheit bieten als lediglich einen Beckengurt aufweisende Zweipunkt-Sicherheitsgurtsysteme. Problematisch bei den bekannten Sicherheitsgurtsystemen für Fahrgastsitze ist jedoch die Tatsache, dass diese fast ausschließlich auf die Größe von erwachsenen Personen ausgelegt sind, weshalb bei Kindern oder sehr kleinen Erwachsenen das Gurtband häufig im Halsbereich verläuft, wodurch eine optimale Sicherheit nicht gewährleistet ist. Ein Beispiel für einen solchen gattungsgemäßen Fahrgastsitz ist in der DE 10 2010 049 201 A1 beschrieben.

Aus der US 2011/0089744 A1 ist ein Fahrgastsitz bekannt, bei dem ein erstes Umlenkelement an der hinteren Fläche der Rückenlehne und ein zweites Umlenkelement an einer Seitenfläche der Rückenlehne angebracht ist. Das erste Umlenkelement dient zur Umlenkung des Sicherheitsgurtbands, da der Retraktor ebenfalls an der hinteren Fläche der Rückenlehne angebracht ist und das Sicherheitsgurtband zu dem an der Seitenfläche angebrachten, zweiten Umlenkelement umgelenkt werden muss.

Es ist daher Aufgabe der vorliegenden Erfindung, einen Fahrgastsitz mit einem Sicherheitsgurtsystem zu schaffen, das sowohl für Erwachsene als auch für Kinder oder sehr kleine Personen geeignet ist.

Erfindungsgemäß wird diese Aufgabe durch die in Anspruch 1 genannten Merkmale gelöst.

Durch das erfindungsgemäße, unterhalb des ersten Umlenkelements an der Rückenlehne angebrachte zweite Umlenkelement ist es möglich, das Gurtband in einem tieferen Bereich umzulenken, sodass bei der Benutzung des erfindungsgemäßen Fahrgastsitzes durch Kinder das Gurtband in korrekter Weise über den Körper geführt werden kann. Auf diese Weise wird erheblich zur Verbesserung der Sicherheit von solche Fahrgastsitze in Reisebussen benutzenden Kindern oder kleinen Personen beigetragen.

In einer sehr vorteilhaften Weiterbildung der Erfindung kann vorgesehen sein, dass die Ausnehmung des zweiten Umlenkelements auf einer Seite eine Öffnung zur Einführung des Gurtbands aufweist. Dadurch kann die Bedienung des Sicherheitsgurtsystems des erfindungsgemäßen Fahrgastsitzes erheblich vereinfacht werden, da das Gurtband problemlos durch die Öffnung in die Ausnehmung eingeführt und aus derselben entnommen werden kann, um das Gurtband entweder über das zweite Umlenkelement umzulenken oder eine solche Umlenkung nicht vorzunehmen.

Wenn dabei vorgesehen ist, dass die Öffnung der Ausnehmung des zweiten Umlenkelements sich auf der der Rückseite der Rückenlehne zugerichteten Seite des zweiten Umlenkelements befindet, wobei das zweite Umlenkelement auf der der Öffnung gegenüberliegenden Seite geschlossen ist, so ist einerseits ein einfaches Einführen des Gurtbands in das zweite Umlenkelement möglich und es wird andererseits ein ungewolltes Herausrutschen des Gurtbands aus dem zweiten Umlenkelement verhindert.

Des Weiteren kann vorgesehen sein, dass das zweite Umlenkelement U-förmig mit zwei Schenkeln ausgebildet ist, wobei sich zwischen den Schenkeln die Ausnehmung befindet. Dies stellt eine sehr einfach zu realisierende Ausführungsform des zweiten Umlenkelements dar, wobei insbesondere die Öffnung zum Einführen des Gurtbands in einfacher Weise gebildet werden kann.

Wenn dabei vorgesehen ist, dass die beiden Schenkel einen Abstand von mindestens 4 mm aufweisen, so ist stets gewährleistet, dass sich das Gurtband frei in der Ausnehmung des zweiten Umlenkelements bewegen kann, ohne eingeklemmt zu werden.

Um eine sichere Führung des Gurtbands in dem zweiten Umlenkelement zu gewährleisten, kann des Weiteren vorgesehen sein, dass die Länge der beiden Schenkel mindestens so groß ist wie die Breite des Gurtbands.

In einer weiteren vorteilhaften Ausführungsform der Erfindung kann vorgesehen sein, dass die beiden Schenkel in Längsrichtung der Rückenlehne untereinander angeordnet sind. Dies stellt eine besonders vorteilhafte Möglichkeit dar, um die gewünschte Führung des Gurtbands durch das zweite Umlenkelement zu erreichen.

In einer weiteren vorteilhaften Ausführungsform der Erfindung kann vorgesehen sein, dass das zweite Umlenkelement an einer Drehachse drehbar an der Rückenlehne angebracht ist. Durch die Drehbarkeit des zweiten Umlenkelements ist gewährleistet, dass sich dasselbe stets in der richtigen Position befindet, auch wenn der Fahrgast seine Position auf dem Fahrgastsitz ändert.

Eine hinsichtlich der Anpassung des zweiten Umlenkelements an die Größe von den erfindungsgemäßen Fahrgastsitz benutzenden Kindern oder kleinen Personen sehr vorteilhafte Weiterbildung der Erfindung kann darin bestehen, dass das zweite Umlenkelement mit einem Abstand von 100-150 mm unterhalb des ersten Umlenkelements angebracht ist.

Des Weiteren kann vorgesehen sein, dass das zweite Umlenkelement aus Stahl, Kunststoff oder einer Mischung dieser Materialien besteht. Ein derartiges Material ist besonders gut für die Anforderungen geeignet, die an ein solches Umlenkelement in einem Sicherheitsgurtsystem für einen Fahrgastsitz gestellt werden.

Um die Höhe des zweiten Umlenkelements an die Größe der sich auf dem Fahrgastsitz befindenden Person anpassen zu können, kann außerdem vorgesehen sein, dass das zweite Umlenkelement gegenüber der Rückenlehne in einer im Wesentlichen vertikalen Richtung verschieblich gelagert ist.

Nachfolgend ist ein Ausführungsbeispiel der Erfindung anhand der Zeichnung prinzipmäßig dargestellt.

Es zeigt:
- Fig. 1: eine Vorderansicht eines erfindungsgemäßen Fahrgastsitzes;
- Fig. 2: eine Seitenansicht des Fahrgastsitzes gemäß dem Pfeil II aus Fig. 1; und
- Fig. 3: eine vergrößerte Darstellung des zweiten Umlenkelements des Sicherheitsgurtsystems des erfindungsgemäßen Fahrgastsitzes.

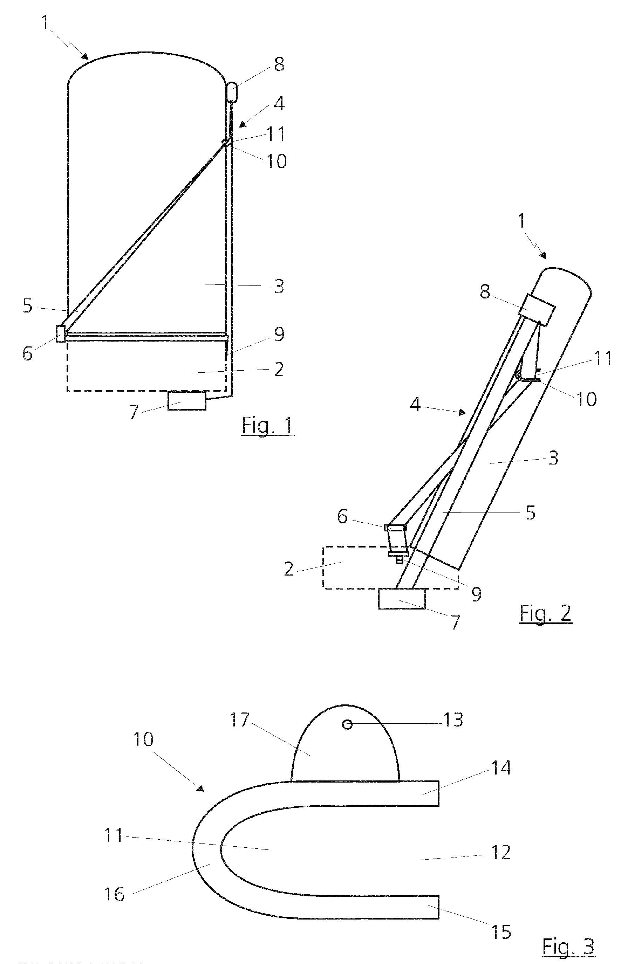

Fig. 1 zeigt einen Fahrgastsitz 1, der in an sich bekannter Weise eine der Übersichtlichkeit halber lediglich mittels einer gestrichelten Linie dargestellte Sitzfläche 2 und eine sich von der Sitzfläche 2 nach oben erstreckende Rückenlehne 3 aufweist. Die Verbindung der Rückenlehne 3 mit der Sitzfläche 2 kann in an sich bekannter Weise erfolgen. Insbesondere ist auch eine Verstellbarkeit der Rückenlehne 3 gegenüber der Sitzfläche 2 möglich, hierauf soll jedoch nicht näher eingegangen werden.

Der Fahrgastsitz 1 weist des Weiteren ein Sicherheitsgurtsystem 4 auf, das im vorliegenden Fall als Dreipunkt-Sicherheitsgurtsystem ausgebildet ist. Das Sicherheitsgurtsystem 4 weist ein Gurtband 5, ein Gurtschloss 6, einen Aufroller 7 zum Aufrollen des Gurtbands 5 und ein an der Rückenlehne 3 angebrachtes erstes Umlenkelement 8 auf. Im vorliegenden Fall ist das Gurtschloss 6 an einem nicht näher bezeichneten Rahmenteil des Fahrgastsitzes 1 angebracht, wohingegen sich der Aufroller 7 unterhalb der Sitzfläche 2 an einem ebenfalls nicht bezeichneten Rahmenteil desselben befindet. Das Gurtband 5 verläuft von dem Aufroller 7 durch das erste Umlenkelement 8 zu dem Gurtschloss 6 und von dort zu einem Befestigungspunkt 9 auf der dem Gurtschloss 6 gegenüberliegenden Seite des Fahrgastsitzes 1. Der Befestigungspunkt 9 kann an der Rückenlehne 3 oder der Sitzfläche 2 vorgesehen sein.

Zusätzlich zu dem ersten Umlenkelement 8 weist das Sicherheitsgurtsystem 4 des Fahrgastsitzes 1 ein zweites Umlenkelement 10 auf, das unterhalb des ersten Umlenkelements 8 an der Rückenlehne 3 angebracht ist. Das zweite Umlenkelement 10 weist eine Ausnehmung 11 zur Durchführung des Gurtbands 5 auf. Durch das Vorhandensein des zweiten Umlenkelements 10 kann das Gurtband 5 in einer tieferen Position umgelenkt werden als wenn lediglich das erste Umlenkelement 8 vorgesehen ist. Dadurch kann das Sicherheitsgurtsystem 4 des Fahrgastsitzes 1 auch von Kindern oder kleineren Erwachsenen benutzt werden, da sich das Gurtband 5 in einer tieferen Position befindet, wenn es zusätzlich zu der Durchführung durch das erste Umlenkelement 8 auch durch das zweite Umlenkelement 10 geführt wird. Dieser Unterschied ist in Fig. 1 mittels einer gestrichelten Linie dargestellt, die das Gurtband 5 zeigt, wenn es lediglich durch das erste Umlenkelement 8 und nicht durch das zweite Umlenkelement 10 geführt wird.

Der Abstand zwischen dem ersten Umlenkelement 8 und dem zweiten Umlenkelement 10 kann zwischen 100 und 150 mm betragen. In nicht dargestellter Weise kann das zweite Umlenkelement 10 gegenüber der Rückenlehne 3 in einer im Wesentlichen vertikalen Richtung verschieblich gelagert sein. Beispielsweise kann hierzu an der Rückenlehne 3 eine Schiene vorgesehen sein, in der das zweite Umlenkelement 10 verschieblich gelagert ist.

Um das Gurtband 5 in die Ausnehmung 11 des zweiten Umlenkelements 10 einführen zu können, weist die Ausnehmung 11 auf einer Seite eine Öffnung 12 auf. Diese Öffnung ist vorzugsweise einer Rückseite 3a der Rückenlehne 3 zugerichtet. Auf der der Öffnung 12 gegenüberliegenden Seite ist die Ausnehmung 11 dagegen geschlossen, sodass das Gurtband 5 nicht aus der Ausnehmung 11 des zweiten Umlenkelements 10 rutschen kann.

Um während seiner Benutzung die in Fig. 2 dargestellte Position einzunehmen, in der Nicht-Gebrauchsstellung jedoch keine Störung darzustellen, ist das zweite Umlenkelement 10 im vorliegenden Fall um eine Drehachse 13 drehbar an der Rückenlehne 3 angebracht. Gegebenenfalls kann hierzu ein Federelement oder ähnliches vorgesehen sein, um das zweite Umlenkelement 10 von seiner in Fig. 2 dargestellten Position in seine Ruheposition zu bringen, in der das zweite Umlenkelement 10 nach hinten gedreht ist.

In Fig. 3 ist das zweite Umlenkelement 10 vergrößert und ohne das Gurtband 5 dargestellt. Dabei ist zu erkennen, dass das zweite Umlenkelement 10 U-förmig ausgebildet ist und zwei Schenkel 14 und 15 aufweist, zwischen denen sich die Ausnehmung 11 befindet. Auf einer einen die beiden Schenkel 14 und 15 des zweiten Umlenkelements 10 verbindenden Bogen 16 gegenüberliegenden Seite befindet sich die Öffnung 12, durch welche das Gurtband 5 in die Ausnehmung 11 eingeführt werden kann. Hierbei beträgt der Abstand zwischen den beiden Schenkeln 14 und 15 vorzugsweise mindestens 4 mm, sodass sich das Gurtband 5 frei innerhalb der Ausnehmung 11 bewegen kann und eine Störung der Bewegung des Gurtbands 5 beim An- und Abschnallvorgang sowie im Crash-Fall verhindert wird. Die Länge der beiden Schenkel 14 und 15 bzw. die Entfernung der Öffnung 12 von dem Bogen 16 entspricht vorzugsweise mindestens der Breite des Gurtbands 5, sodass das Gurtband 5 über seine gesamte Breite durch das zweite Umlenkelement 10 geführt wird.

Die beiden Schenkel 14 und 15 sind im vorliegenden Fall übereinander angeordnet, wobei an dem im vorliegenden Fall oberen Schenkel 14 eine Lasche 17 angebracht ist, mittels welcher das zweite Umlenkelement 10 mit der Rückenlehne 3 verbunden ist. An der Lasche 17 ist im vorliegenden Fall auch die Drehachse 13 vorgesehen.

Das zweite Umlenkelement 10 kann aus Stahl, Kunststoff oder einer Mischung dieser beiden Materialien bestehen. Beispielsweise ist es möglich, einen Stahlkern mit einem Kunststoff zu ummanteln, um das zweite Umlenkelement 10 zu bilden.

## Patentansprüche

1. Fahrgastsitz (1), insbesondere für einen Reisebus, mit einer Sitzfläche (2), einer Rückenlehne (3) und einem Sicherheitsgurtsystem (4), welches ein Gurtband (5), ein Gurtschloss (6), einen Aufroller (7) und ein an einer Seitenfläche der Rückenlehne (3) angebrachtes Umlenkelement (8) für das Gurtband (5) aufweist,
**dadurch gekennzeichnet, dass** an einer Seitenfläche der Rückenlehne (3) unterhalb des ersten Umlenkelements (8) ein zweites Umlenkelement (10) angebracht ist, welches eine Ausnehmung (11) zur Durchführung des Gurtbands (5) aufweist.

2. Fahrgastsitz nach Anspruch 1,
**dadurch gekennzeichnet, dass** die Ausnehmung (11) des zweiten Umlenkelements (10) auf einer Seite eine Öffnung (12) zur Einführung des Gurtbands (5) aufweist.

3. Fahrgastsitz nach Anspruch 2,
**dadurch gekennzeichnet, dass** die Öffnung (12) der Ausnehmung (11) des zweiten Umlenkelements (10) sich auf der der Rückseite (3a) der Rückenlehne (3) zugerichteten Seite des zweiten Umlenkelements (10) befindet, wobei das zweite Umlenkelement (10) auf der der Öffnung (12) gegenüberliegenden Seite geschlossen ist.

4. Fahrgastsitz nach Anspruch 1, 2 oder 3,
**dadurch gekennzeichnet, dass** das zweite Umlenkelement (10) U-förmig mit zwei Schenkeln (14,15) ausgebildet ist, wobei sich zwischen den Schenkeln (14,15) die Ausnehmung (11) befindet.

5. Fahrgastsitz nach Anspruch 4,
**dadurch gekennzeichnet, dass** die beiden Schenkel (14,15) einen Abstand von mindestens 4 mm aufweisen.

6. Fahrgastsitz nach Anspruch 4 oder 5,
**dadurch gekennzeichnet, dass** die Länge der beiden Schenkel (14,15) mindestens so groß ist wie die Breite des Gurtbands (5).

7. Fahrgastsitz nach Anspruch 4, 5 oder 6,
**dadurch gekennzeichnet, dass** die beiden Schenkel (14,15) in Längsrichtung der Rückenlehne (3) untereinander angeordnet sind.

8. Fahrgastsitz nach einem der Ansprüche 1 bis 7,
**dadurch gekennzeichnet, dass** das zweite Umlenkelement (10) an einer Drehachse (13) drehbar an der Rückenlehne (3) angebracht ist.

9. Fahrgastsitz nach einem der Ansprüche 1 bis 8,
**dadurch gekennzeichnet, dass** das zweite Umlenkelement (10) mit einem Abstand von 100-150 mm unterhalb des ersten Umlenkelements (8) angebracht ist.

10. Fahrgastsitz nach einem der Ansprüche 1 bis 9,
**dadurch gekennzeichnet, dass** das zweite Umlenkelement (10) aus Stahl, Kunststoff oder einer Mischung dieser Materialien besteht.

11. Fahrgastsitz nach einem der Ansprüche 1 bis 10,
**dadurch gekennzeichnet, dass** das zweite Umlenkelement (10) gegenüber der Rückenlehne (3) in einer im Wesentlichen vertikalen Richtung verschieblich gelagert ist.

## Claims

1. Passenger seat (1), in particular for a coach, with a seat surface (2), a backrest (3) and a seatbelt system (4) which has a belt strap (5), a belt buckle (6), a retractor (7) and a deflection element (8), which is attached to a side surface of the backrest (3), for the belt strap (5), **characterized in that** a second deflection element (10), which has a recess (11) for the passage of the belt strap (5), is attached to a side surface of the backrest (3) below the first deflection element (8).

2. Passenger seat according to Claim 1, **characterized in that** the recess (11) of the second deflection element (10) has an opening (12) on one side for the insertion of the belt strap (5).

3. Passenger seat according to Claim 2, **characterized in that** the opening (12) of the recess (11) of the second deflection element (10) is located on that side of the second deflection element (10) which faces the rear side (3a) of the backrest (3), wherein the second deflection element (10) is closed on the side opposite the opening (12).

4. Passenger seat according to Claim 1, 2 or 3, **characterized in that** the second deflection element (10) is of U-shaped design with two limbs (14, 15), wherein the recess (11) is located between the limbs (14, 15).

5. Passenger seat according to Claim 4, **characterized in that** the two limbs (14, 15) have a spacing of at least 4 mm.

6. Passenger seat according to Claim 4 or 5, **characterized in that** the length of the two limbs (14, 15) is at least the same size as the width of the belt strap (5).

7. Passenger seat according to Claim 4, 5 or 6, **characterized in that** the two limbs (14, 15) are arranged one below the other in the longitudinal direction of the backrest (3).

8. Passenger seat according to one of Claims 1 to 7, **characterized in that** the second deflection element (10) is attached to the backrest (3) so as to be rotatable at an axis of rotation (13).

9. Passenger seat according to one of Claims 1 to 8, **characterized in that** the second deflection element (10) is attached at a spacing of 100 - 150 mm below the first deflection element (8).

10. Passenger seat according to one of Claims 1 to 9, **characterized in that** the second deflection element (10) is composed of steel, plastic or a mixture of these materials.

11. Passenger seat according to one of Claims 1 to 10, **characterized in that** the second deflection element (10) is mounted so as to be displaceable in relation to the backrest (3) in a substantially vertical direction.

## Revendications

1. Siège passager (1), en particulier pour un autocar de voyage, avec une assise, (2), un appui dorsal (3) et un système de ceinture de sécurité (4), qui comporte une ceinture (5), une serrure de ceinture (6), un enrouleur (7) et un élément de déviation (8) pour la ceinture (5), qui est monté sur la surface latérale de l'appui dorsal (3),
**caractérisé en ce que**,
sur une surface latérale de l'appui dorsal (3), en-dessous du premier élément de déviation (8), est ménagé un second élément de déviation (10) qui comporte un dégagement (11) pour le passage de la ceinture (5).

2. Siège passager selon la revendication 1,
**caractérisé en ce que**,
le dégagement (11) du second élément de déviation (10) présente sur un côté, une ouverture pour l'engagement de la ceinture (5).

3. Siège passager selon la revendication 2,
**caractérisé en ce que**,
l'ouverture (12) du dégagement (11) du second élément de déviation (10) se situe sur le revers (3a) de l'appui dorsal (3) orienté vers le second élément de déviation (10), dans lequel le second élément de déviation (10) est verrouillé sur le côté disposé face à l'ouverture (12).

4. Siège passager selon la revendication 1, 2 ou 3,
**caractérisé en ce que**,
le second élément de déviation (10) a un profil en forme de U avec deux jambages (14, 15), dans lequel le dégagement (11) se situe entre les jambages (14,15).

5. Siège passager selon la revendication 4,
**caractérisé en ce que**,
les deux jambages (14, 15) sont espacés d'un intervalle d'au moins 4 mm.

6. Siège passager selon la revendication 4 ou 5,
**caractérisé en ce que**,
la longueur des deux jambages (14, 15) est au moins aussi grande que la largeur de la ceinture (5).

7. Siège passager selon la revendication 4, 5 ou 6,
**caractérisé en ce que**,
les deux jambages (14, 15) sont, dans la direction longitudinale de l'appui dorsal (3), disposés l'un derrière l'autre.

8. Siège passager selon l'une des revendications 1 à 7,
**caractérisé en ce que**,
le second élément de déviation (10) est monté sur un axe de rotation (13) monté sur l'appui dorsal (3).

9. Siège passager selon l'une des revendications 1 à 8,
**caractérisé en ce que**,
le second élément de déviation (10) est monté avec un écart de 100 - 150 mm par rapport au premier élément de déviation (8).

10. Siège passager selon l'une des revendications 1 à 9,
**caractérisé en ce que**,
le second élément de déviation (10) est réalisé en acier, en matière plastique ou en un mélange de ces matériaux.

11. Siège passager selon l'une des revendications 1 à 10,
**caractérisé en ce que**,
le second élément de déviation (10) est mobile par coulissement selon une direction sensiblement verticale par rapport à l'appui dorsal (3).
